# FASCICULE DE BREVET EUROPEEN

(11) **EP 0 297 384 B1**
(45) Date de publication et mention de la délivrance du brevet: **05.05.1993**
(21) Numéro de dépôt: 88109808.1
(22) Date de dépôt: 18.09.1985
(51) Int. Cl.: A01D 34/66

(54) **Faucheuse rotative**
Kreiselmäher
Rotary mower

(30) Priorité: 19.09.1984 FR 8414487
(43) Date de publication de la demande: 04.01.1989
(62) Demande divisionnaire de: 85440053.8
(73) Titulaire: KUHN S.A., F-67700 Saverne (FR)
(72) Inventeur: Wolff, Michel, F-67670 Mommenheim (FR)

(56) Documents cités:
- EP-A- 0 060 600
- EP-A- 0 099 314
- EP-A- 0 206 965
- FR-A- 2 228 414
- FR-A- 2 262 484
- FR-A- 2 332 694
- FR-A- 2 394 239
- GB-A- 2 089 637

## Description

La présente invention concerne une faucheuse rotative munie d'au moins deux organes de coupe disposés au-dessus d'un carter et liés chacun à un arbre dirigé vers le haut qui est guidé en rotation dans un palier s'étendant à la face supérieure dudit carter, lesdits organes de coupe étant entraînés en rotation par des moyens d'entraînement logés au moins partiellement dans ledit carter, ladite faucheuse comportant en sus des moyens de glissement et/ou de protection de l'organe de coupe liés de manière amovible au carter.

On connaît une telle faucheuse dans laquelle c'est directement la partie frontale du carter qui protège les organes de coupe. Cette partie frontale du carter est donc soumise à une forte usure et à des chocs plus ou moins importants qui peuvent rendre hors d'usage le carter après un certain temps de travail. Comme ce carter est réalisé en une seule pièce, il est donc nécessaire de le changer entièrement, ce qui occasionne des frais importants à l'utilisateur.

Il est connu sur d'autres faucheuses (GB-A-2 089 637) de fixer sur la face frontale du carter des pièces supplémentaires par l'intermédiaire desquelles la barre de coupe desdites faucheuses glisse sur le sol et/ou qui protègent les organes de coupe. Ces pièces peuvent alors être remplacées lorsqu'elles sont usées. Ces pièces supplémentaires alourdissent cependant la barre de coupe qui nécessite déjà un dispositif d'allégement pour qu'elle repose plus légèrement sur le sol pendant le travail.

Par ailleurs, ces pièces supplémentaires renchérissent la faucheuse.

La présente invention a pour but de remédier aux inconvénients de ces faucheuses connues.

A cet effet, la faucheuse rotative selon la présente invention est caractérisée par le fait que lesdits moyens de glissement et/ou de protection de l'organe de coupe font partie intégrante du carter et ferment de manière amovible en partie au moins la face frontale et/ou la face inférieure dudit carter.

Avec cette caractéristique, il est possible de maintenir le poids de la barre de coupe d'une faucheuse rotative relativement bas, tout en conservant l'avantage de l'amovibilité des moyens de glissement et/ou de protection de l'organe de coupe. Il n'est donc pas nécessaire de changer tout le carter lorsque lesdits moyens de glissement et/ou de protection de l'organe de coupe sont usés.

D'autres caractéristiques de l'invention apparaîtront dans les sous-revendications et dans la description suivante d'un exemple de réalisation non limitatif représenté sur le dessin annexé sur lequel :
- La figure 1 représente une vue arrière de la barre de coupe d'une faucheuse conforme à l'invention,
- La figure 2a représente une vue de la barre de coupe de la faucheuse selon l'invention, coupée suivant le plan IIa,
- La figure 2b représente une vue de la barre de coupe de la faucheuse selon l'invention, coupée suivant le plan IIb (l'organe de coupe a été tourné de 90°),
- La figure 3 représente une vue de dessus du carter de la barre de coupe,
- La figure 4 représente une coupe selon le plan IV, et
- La figure 5 représente une coupe selon le plan V.

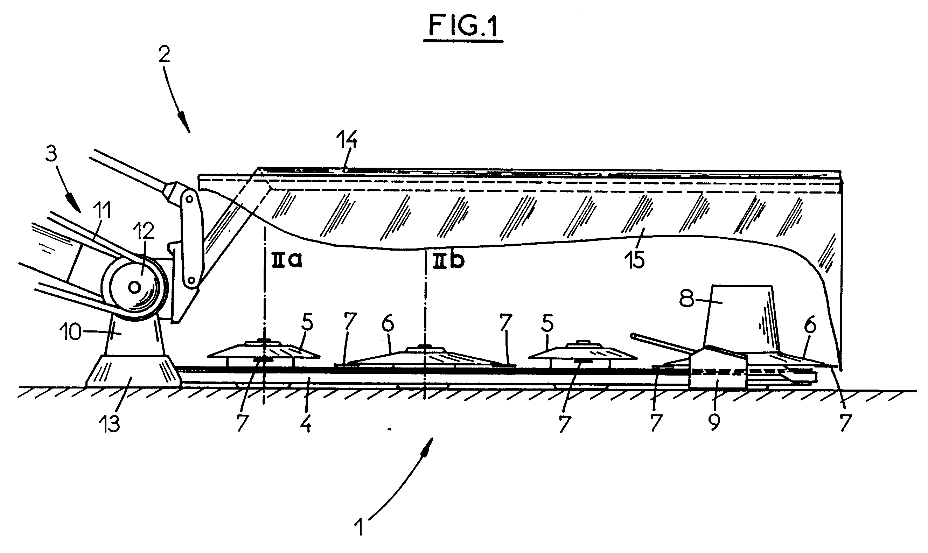

Sur la figure 1, est représentée la barre de coupe (1) d'une faucheuse (2). Cette faucheuse (2) comporte par ailleurs un dispositif d'attelage (3) qui n'est que partiellement représenté et qui permet d'atteler la barre de coupe (1) à un tracteur agricole par exemple non représenté sur le dessin.

La barre de coupe (1) comporte un carter (4) dans lequel s'étendent des moyens d'entraînement des organes de coupe (5, 6). Ces organes de coupe comportent dans l'exemple représenté des disques. Les disques (5, 6) s'étendent à la face supérieure du carter (4) et sont munis d'outils de coupe tels que les couteaux (7). Le disque (6) situé à l'extrémité de la barre de coupe (1) éloignée du dispositif d'attelage (3), est surmonté par un dispositif d'andainage rotatif (8). Ce dispositif d'andainage rotatif (8) collabore avec un dispositif d'andainage fixe (9) pour réduire la largeur de l'andain de fourrage coupé déposé derrière la barre de coupe (1).

A l'extrémité de la barre de coupe (1) située du côté du dispositif d'attelage (3), s'étend un carter de renvoi (10). Ce carter de renvoi (10) sert à transmettre le mouvement depuis la courroie (11) jusqu'aux moyens d'entraînement s'étendant dans le carter (4) de la barre de coupe (1). A cet effet, le carter de renvoi (10) comporte une poulie (12) sur laquelle s'enroule la courroie (11) qui s'enroule par ailleurs sur une autre poulie non représentée soutenue par le dispositif d'attelage (3) et qui reçoit le mouvement de la prise de force du tracteur par 1 intermédiaire d'un arbre de transmission non représenté.

Le carter de renvoi (10) sert également d'une manière connue de l'homme de l'art à lier la barre de coupe (1) au dispositif d'attelage (3).

Sous le carter de renvoi (10) est agencé un sabot (13) qui permet à cette extrémité de la barre de coupe (1) de glisser sur le sol et qui évite que du fourrage coupé ne puisse s'accrocher au carter de renvoi (10).

Au-dessus de la barre de coupe (1) s'étend un support (14) qui maintient un dispositif de protection (15).

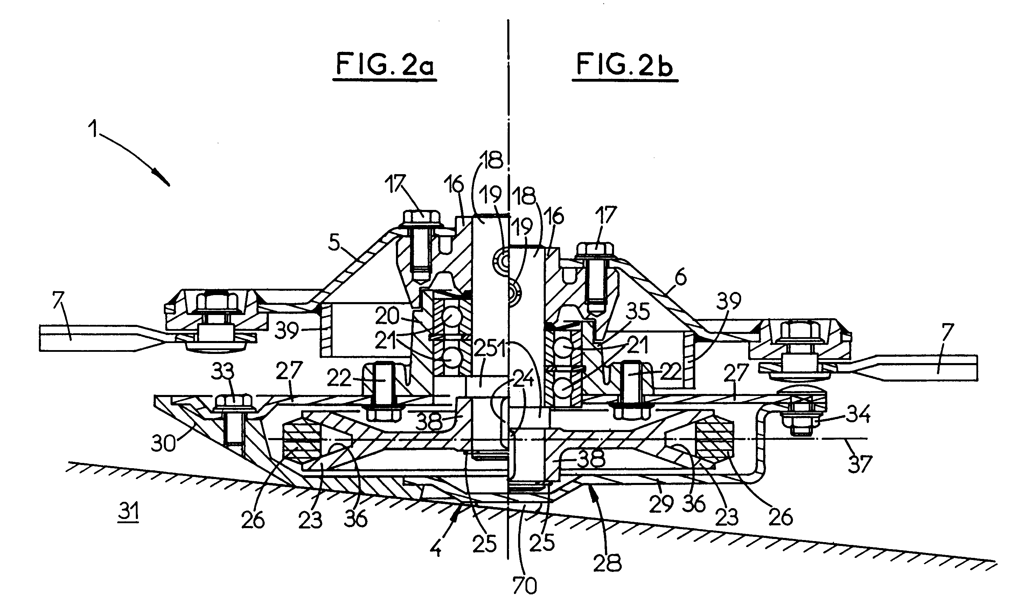

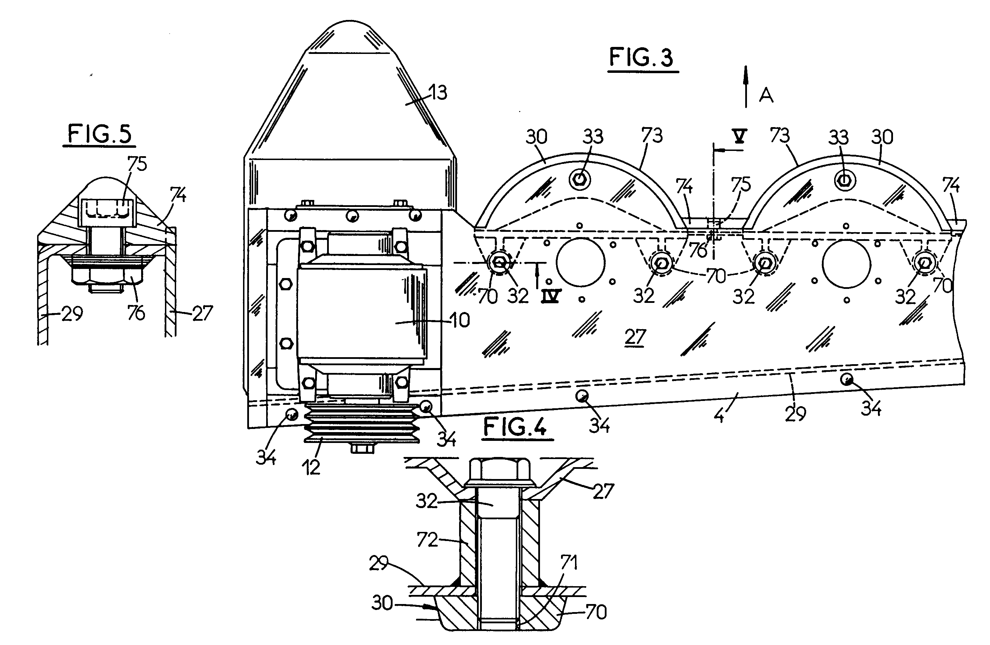

Tel qu'il sera visible sur les figures 2 et 3, les moyens d'entraînement logés dans le carter (4) ne peuvent pas empêcher que les disques (5, 6) se désynchronisent pendant le travail. Pour éviter que les couteaux (7) ne puissent entrer en collision, les disques (5) tournent dans des plans de rotation différents et plus haut que ceux dans lesquels tournent les disques (6). Les couteaux (7) peuvent ainsi balayer des zones communes en vue en plan, sans que lesdits couteaux (7) ne puissent se toucher même s'ils balayent sensiblement en même temps lesdites zones après que les disques se soient désynchronisés.

La figure 2a montre l'agencement d'un disque haut (5). Le disque (5) est muni de couteaux (7) qui y sont montés au moyen d'une liaison permettant à chaque couteau de pivoter vers l'arrière et de se ranger sous le disque (5) en cas de rencontre avec un obstacle. Le disque (5) est fixé sur un entraîneur (16) à l'aide d'un certain nombre de vis (17). L'entraîneur (16) est lui-même fixé sur un arbre (18) dirigé vers le haut par l'intermédiaire d'une goupille (19). L'arbre (18) est guidé en rotation dans un palier (20) au moyen de deux roulements (21). Ce palier (20) est fixé sur le carter (4) à l'aide de vis (22). A l'intérieur du carter (4), l'arbre (18) est lié à une roue (23). Cette liaison est démontable. Dans le cas de la figure 2a, elle est réalisée au moyen d'une clavette (24) qui fait la liaison en rotation et au moyen d'un circlips (25) et d'un épaulement (251) de l'arbre (18) qui font la liaison en translation.

La roue (23) est entraînée par un organe de transmission sans fin tel que la courroie hexagonale (26).

Le carter (4) est constitué par un couvercle (27) sensiblement plan et par un fond (28). Ce fond (28) en forme d'auge comporte une partie arrière (29) en tôle pliée et des moyens (30) de glissement et de protection du disque. Les moyens (30) de glissement et de protection du disque permettent à la barre de coupe (1) de glisser sur le sol (31). A cet effet, ils ont une forme de ski.

Sur la figure 3, on voit encore qu'en vue de dessus, le bord avant (73) d'un moyen (30) de glissement et de protection du disque a une forme sensiblement circulaire centrée sensiblement sur l'axe de rotation du disque correspondant. Avantageusement ce bord avant (73) s'étend légèrement au-delà de la trajectoire extrême décrite par le disque correspondant pendant sa rotation. Le moyen (30) de glissement et de protection du disque peut ainsi également remplir une fonction de protection frontale du disque correspondant.

Comme ces moyens (30) de glissement et de protection du disque sont soumis à une forte usure, il est préférable de pouvoir les changer rapidement. Dans ce but, les moyens (30) de glissement et de protection du disque sont fixés de manière démontable sur la partie arrière (29) du fond (28) et sur le couvercle (27) au moyen de vis (32) (voir figures 3 et 4), et à l'avant, sur le couvercle (27) seul, à l'aide de vis (33). Le couvercle (27) et la partie arrière (29) sont quant à eux, liés à l'arrière par des vis (34).

Pour ne pas alourdir le carter (4), les moyens de glissement et de protection du disque (30) font partie intégrante du carter (4) et ferment en partie au moins la face frontale et en partie au moins la face inférieure dudit carter (4).

La figure 2b montre l'agencement d'un disque bas (6). Les pièces identiques à celles de la figure 2a gardent le même repère. Le disque bas (6) est également muni de couteaux (7). Ce disque (6) est fixé sur un entraîneur (16) à l'aide de vis (17). Tout comme précédemment, l'entraîneur (16) est fixé sur un arbre (18) dirigé vers le haut au moyen d'une goupille (19).

L'arbre (18) est guidé en rotation dans un palier (35) par l'intermédiaire de deux roulements (21). Ledit palier (35) est fixé sur le dessus du carter (4), c'est-à-dire sur le couvercle (27) au moyen de vis (22).

Tel que visible sur la figure 2b, l'arbre (18) d'un disque bas (6) pénètre plus dans le carter (4) que l'arbre (18) d'un disque haut (5). Cette pénétration plus importante de l'arbre (18) est donnée par le palier (35) qui est plus petit que le palier (20) d'un disque haut (5). La différence de hauteur entre les deux paliers (20) et (35) correspond au décalage entre le dique haut (5) et le disque bas (6).

Pour permettre à la courroie (26) de tourner sensiblement dans le même plan, la partie des roues (23) d'un disque haut (5) et d'un disque bas (6) où se fait la transmission du mouvement, c'est-à-dire la gorge (36), se trouve sensiblement dans le même plan. Ce résultat a été obtenu par le fait que la roue (23) d'un disque bas (6) occupe une autre position par rapport à son arbre (18) que la roue (23) d'un disque haut (5). Pour ce faire, les roues (23) ont un moyeu (38) qui est décentré par rapport au plan de symétrie (37) de leur gorge (36). Ainsi, dans le cas d'un disque haut (5), le moyeu (38) de la roue (23) se situe pour l'essentiel au-dessus du plan de symétrie (37) de la gorge (36) tandis que dans le cas d'un disque bas (6) le moyeu (38) de la roue (23) se situe pour l'essentiel en-dessous du plan de symétrie (37) de sa gorge (36).

Sur les figures 2a et 2b, on voit encore que le disque (5, 6) est muni d'un organe d'arrêt (39) qui limite la rotation des couteaux (7). Ceci permet de protéger le palier (35) lorsqu'un couteau (7) se range sous le disque.

Parallèlement, cet organe d'arrêt (39) peut également servir à rigidifier le disque.

La figure 3 montre plus amplement la réalisation du carter (4). Comme dit précédemment, les moyens (30) de glissement et de protection du disque font partie intégrante du carter (4). Ils sont chacun fixés sur le couvercle (27) et sur la partie arrière (29) du fond (28) à l'aide de deux vis (32) et d'une vis (33). L'agencement des vis (32) est représenté en coupe et à une échelle agrandie sur la figure 4. Chaque moyen de glissement et de protection du disque (30) comporte deux bossages (70) qui comportent chacun un trou fileté (71). La partie arrière (29) du fond (28) est quant à elle munie d'entretoises (72) qui y sont soudées et qui s'étendent jusqu'au couvercle (27). La vis (32) est engagée par le haut de manière à traverser le couvercle (27), l'entretoise (72) correspondante, la partie arrière (29) du fond (28), puis est vissée dans le trou fileté (71) du bossage (70) correspondant. En liant ainsi entre eux les moyens (30) de glissement et de protection du disque, la partie arrière (29) du fond (28) et le couvercle (27), la rigidité du carter (4) se trouve renforcée.

Dans l'espace situé entre deux moyens (30) de glissement et de protection du disque voisins, s'étend un élément de fermeture (74) qui, tel que visible sur la figure 5, est relativement pointu pour diminuer le risque d'accrochage de débris végétaux entre deux moyens (30) de glissement et de protection du disque adjacent. L'élément de fermeture (74) est fixé sur la partie arrière (29) du fond (28) au moyen d'une vis (75) qui traverse ledit élément de fermeture et est vissée dans un écrou (76) soudé sur un bord vertical aménagé sur ladite partie arrière (29).

On voit enfin encore sur les figures 2a et 3 que les moyens (30) de glissement et/ou de protection du disque sont réalisés par moulage.

## Revendications

1. Faucheuse rotative (2) munie d'au moins deux organes de coupe (5, 6) disposés au-dessus d'un carter (4) et liés chacun à un arbre (18) dirigé vers le haut qui est guidé en rotation dans un palier (20, 35) s'étendant à la face supérieure dudit carter (4), lesdits organes de coupe (5, 6) étant entraînés en rotation par des moyens d'entraînement (10, 11, 12, 23, 26) logés au moins partiellement dans le carter (4), ladite faucheuse (2) comportant en sus des moyens (30) de glissement et/ou de protection de l'organe de coupe, caractérisée par le fait que lesdits moyens de glissement et/ou de protection de l'organe de coupe (30) font partie intégrante du carter (4) et ferment de manière amovible en partie au moins la face frontale et/ou la face inférieure dudit carter (4).

2. Faucheuse selon la revendication 1, caractérisée par le fait que les moyens (30) de glissement et/ou de protection de l'organe de coupe sont fixés sur la partie arrière (29) de la partie inférieure (28) et sur la partie supérieure (27) au moyen de vis (32) qui passent au travers d'entretoises (72) s'étendant entre la partie inférieure (28) et la partie supérieure (27) du carter (4) pour maintenir la distance relative entre ces deux parties (27, 28).

3. Faucheuse selon la revendication 2, caractérisée par le fait qu'à l'avant les moyens (30) de glissement et/ou de protection de l'organe de coupe sont en sus fixés à la partie supérieure (27) du carter (4) au moyen de vis (33).

4. Faucheuse selon l'une au moins des revendications 1 à 3, caractérisée par le fait que l'espace entre deux moyens (30) de glissement et/ou de protection de l'organe de coupe est fermé par un moyen de fermeture (74).

5. Faucheuse selon la revendication 4, caractérisée par le fait que le moyen de fermeture (74) est démontable.

6. Faucheuse selon l'une au moins des revendications 4 ou 5, caractérisée par le fait que le moyen de fermeture (74) est pointu à sa partie frontale.

7. Faucheuse selon l'une au moins des revendications 1 à 6, caractérisée par le fait que les moyens (30) de glissement et/ou de protection de l'organe de coupe sont réalisés par un procédé de moulage.

## Claims

1. Rotary mower (2) provided with at least two cutting elements (5, 6) arranged above a gearbox (4) and each connected to an upwardly directed shaft (18) which is guided in rotation in a bearing (20, 35) extending at the upper face of said gearbox (4), said cutting elements (5, 6) being driven in rotation by driving means (10, 11, 12, 23, 26) housed at least partially in the gearbox (4), said mower (2) additionally comprising sliding and/or cutting element protection means (30), characterized in that the said sliding and/or cutting element protection means (30) are an integral part of the gearbox (4) and at least partially close in a removable manner the front face and/or the lower face of said gearbox (4).

2. Mower according to claim 1, characterized in that the sliding and/or cutting element protection means (30) are fastened to the rear part (29) of the lower portion (28) and to the upper portion (27) by means of screws (32) which go through braces (72) extending between the lower portion (28) and the upper portion (27) of the gearbox (4) to keep the relative distance between these two portions (27, 28).

3. Mower according to claim 2, characterized in that the sliding and/or cutting element protection means (30) are in the front additionally fastened to the upper portion (27) of the gearbox (4) by means of screws (33).

4. Mower according to at least one of claims 1 to 3, characterized in that the space between two sliding and/or cutting element protection means (30) is closed by a closing element (74).

5. Mower according to claim 4, characterized in that the closing element (74) is removable.

6. Mower according to at least one of claims 4 or 5, characterized in that the closing element (74) is pointed at its front part.

7. Mower according to at least one of claims 1 to 6, characterized in that the sliding and/or cutting element protection means (30) are achieved by casting.

## Patentansprüche

1. Kreiselmäher (2) mit zumindest zwei Schneidorganen (5, 6), welche über einem Gehäuse (4) angeordnet und jeweils mit einer aufrechtstehenden Welle (18) verbunden sind, die drehbar in einem Lager (20, 35), das sich an der Oberseite des Gehäuses (4) erstreckt, geführt ist, wobei die Schneidorgane (5, 6) mittels zumindest teilweise in dem Gehäuse (4) untergebrachten Antriebselementen (10, 11, 12, 23, 26) rotierend angetrieben sind, und wobei der Mäher (2) zusätzlich mit Gleit- und/oder Schneidorganschutzelementen (30) versehen ist, dadurch gekennzeichnet, dass die Gleit- und/oder Schneidorganschutzelemente (30) Bestandteile des Gehäuses (4) sind und zumindest teilweise die Frontseite und/oder die Unterseite des Gehäuses (4) lösbar verschliessen.

2. Mäher nach Anspruch 1, dadurch gekennzeichnet, dass die Gleit- und/oder Schneidorganschutzelemente (30) mit dem hinteren Teil (29) des Unterteils (28) und mit dem Oberteil (27) mittels Schrauben (32) verbunden sind, die durch sich zwischen dem Unterteil (28) und dem Oberteil (27) des Gehäuses (4) erstreckende Zwischenstücke (72) ragen, welche den relativen Abstand zwischen diesen beiden Teilen erhalten.

3. Mäher nach Anspruch 2, dadurch gekennzeichnet, dass die Gleit- und/oder Schneidorganschutzelemente (30) an ihrer Vorderseite mittels Schrauben (33) mit dem Oberteil (27) des Gehäuses (4) zusätzlich verbunden sind.

4. Mäher nach zumindest einem der Ansprüche 1 bis 3, dadurch gekennzeichnet, dass der Raum zwischen zwei Gleit- und/oder Schneidorganschutzelemente (30) mittels eines Verschlusselementes (74) verschlossen ist.

5. Mäher nach Anspruch 4, dadurch gekennzeichnet, dass das Verschlusselement (74) abnehmbar ist.

6. Mäher nach zumindest einem der Ansprüche 4 oder 5, dadurch gekennzeichnet, dass das Verschlusselement (74) an seiner Frontseite spitz ist.

7. Mäher nach zumindest einem der Ansprüche 1 bis 6, dadurch gekennzeichnet, dass die Gleit- und/oder Schneidorganschutzelemente (30) durch ein Giessverfahren hergestellt sind.
